# EUROPEAN PATENT SPECIFICATION

(11) **EP 2 371 193 B1**
(45) Date of publication and mention of the grant of the patent: **14.11.2012**
(21) Application number: 11172093.4
(22) Date of filing: 03.08.2007
(51) Int. Cl.: A01B 49/06, A01C 7/20

(54) **Improved seed drill**
Verbesserte Saatmaschine
Semoir à grains amélioré

(30) Priority: 05.08.2006 GB 0615581
(43) Date of publication of application: 05.10.2011
(62) Divisional of application: 07789120.8
(73) Proprietor: Claydon, Jeffrey Thomas, Newmarket, Suffolk CB8 7YA (GB)
(72) Inventor: Claydon, Jeffrey Thomas, Newmarket, Suffolk CB8 7YA (GB)
(74) Representative: Willett, Christopher David

(56) References cited:
- EP-A- 0 136 165
- WO-A-98/03053
- WO-A-2004/000004
- WO-A-2004/086849
- CA-A1- 2 224 854
- DE-A1- 2 824 978
- DE-A1- 3 805 925
- DE-U1- 9 422 134
- US-A- 4 244 306
- US-B1- 6 688 243

## Description

### Field of Invention

The invention relates to a new apparatus for cultivating land and planting seed to produce crops.

### Background to the Invention

It is known to cultivate land (which may have previously been ploughed) and then sow seed into the cultivated soil in a plurality of spaced apart lines using conventional seed drilling apparatus that is pulled by, or attached to, a tractor.

WO 2004/086849 discloses an improved seed drill which sows seed from seeding tines in rows directly behind digging tines, thus leaving uncultivated land in between the cultivated and seeded lines.

WO 2004/000004 discloses an apparatus comprising first and second rows of digging tines aligned with first an second rows of seeding discs respectively.

The present invention concerns further improvements to the design of the seed drill disclosed in WO 2004/086849 and in WO 2004/000004.

### Summary of Invention

The inventors have found that it may be advantageous to operate with two rows of digging tines and two rows of seeding tines, particularly if the lateral spacing between the seeded lines is to be less than the minimum lateral spacing possible between adjacent tines.

Thus, the invention provides an apparatus for cultivating soil and sowing seed comprising:
(a) a frame means adapted in use to be towed by, or attached to the rear of, a tractor,
(b) a first row of spaced apart digging tines carried by the frame means,
(c) a first row of seeding tines carried by the frame means, each of the seeding tines being aligned with one of the digging tines to the rear of and spaced from the first row of digging tines measured in a direction parallel to the direction of forward motion of the apparatus when in use,
(d) a second row of spaced apart digging tines carried by the frame means, none of which are aligned with any one of the tines in the first row of digging tines,
(e) a second row of seeding tines carried by the frame means, each of which is aligned with one of the tines in the second row of digging tines
whereby, in use, soil will only be disturbed in parallel spaced apart linear regions where spacing is determined by the spacing between the tines in the two rows of digging tines, measured at right angles to the direction of movement of the apparatus when in use, and leaving uncultivated strips of soil therebetween.

Preferably, the second row of digging tines are positioned midway between the tines in the first row of digging tines.

The frame means may comprise a single frame or two frames which can be independently raised or lowered. In the latter case it is preferable that the two rows of digging tines are carried by one of the frames and the two rows of seeding tines are carried by the other of the frames.

Each of the first and/or second rows of seeding tine may also be independently adjustable for depth of work. Each may be fitted with an 'A hoe' with a seed spreader outlet to sow seed across the width of the trench to whatever level the seeding tine penetrates.

Typically this width is of the order 150mm, so that the seed can be thought of as being sown in spaced apart strips normally 150mm wide.

In the first aspect of the invention the lateral spacing of the tines is typically of the order of 300mm so that the result will be 150mm wide seeded strips separated by 150mm wide unseeded strips.

If the lateral spacing of the digging tines in each row of digging tines in the apparatus constructed in accordance with the second aspect of the invention is 600mm, and the tines in the second row of digging tines are positioned midway between those in the first row of digging tines, the result will again be 150mm wide seeded strips, separated by 150mm wide unseeded strips. In this example, the second aspect of the invention allows for the same cultivated soil, but with more widely spaced tines along each row, giving more room for any associated equipment.

If the lateral spacing between tines in each row is not an issue, then, in the apparatus constructed in accordance with the second aspect of the invention, the tines can be located closer together, such that there is e.g. 400mm between tines so that the seeded trenches are now spaced apart by 50mm strips of uncultivated soil.

Each row of tines may extend transversely to the direction of forward travel of the frame means or may comprise a V formation with the vertex of the V pointing in the direction of forward motion of the apparatus.

Typically each of the tines in the first and/or second row of digging tines each comprises a knife or slotter tine. Preferably each such tine can be adjusted independently for depth of work.

Such tines break the soil to the desired depth, create drainage, remove compaction and aerate the soil, which is essential for healthy crop growth. Because of their narrow design each such tine cuts through even heavy loam and clay and forms a primary passage or trench for the following seeding tine which carries the seed delivery means for that trench.

Where the apparatus of the invention is used on cropped land where stubble or other crop residue remains in the soil, the latter will remain in the unseeded strips and be added to by the trenching action of the tines. These unseeded strips will constitute conservation bands between the cultivated and seeded strips, in that each digging tine in the first row creates a path for each following seeding tine. The apparatus of the invention has the advantage of moving the crop residue such as straw and stubble onto the soil between the seeded lines. This acts as a mulch, and further enhances weed control with the added advantage that the crop residue retains soil moisture.

This is a considerable advantage on lighter soils that can burn off in dry seasons. However the invention is equally applicable to heavier soils since the local break up and resulting aeration and drainage created by the digging tines, below the seed depth, assists in the germination and subsequent growth of the seeds.

If the soil contains any moveable stones then these will also be moved onto the soil between the seeded lines.

It has been found that the presence of additional straw and stubble on the uncultivated strips left by the first row of digging and seeding tines does not present problems when the second row of digging and seeding tines pass through. The latter simply move the straw and stubble onto the uncultivated soil between the seeded lines as in the first aspect of the invention. Additionally, the laterally spaced tines in the second row of digging tines displace any moveable stones out of the path of the following seeding tines, even if these were initially positioned there by the action of the first row of digging tines.

To obtain the best mulching effect when using the invention, it is advantageous to finely chop previous crop residue such as straw into chaff, and to spread the chaff evenly over the ground, as or immediately after the previous crop is harvested.

Leaving the stubble and not ploughing does allow seed from a previous crop as well as weed seeds to germinate, but these can be sprayed off with a contact herbicide.

Where seed is to be sown near the top of the trench the seeding tines may be spring tines the lower ends of which include lateral wings to form an A hoe to lift the soil prior to the seed being delivered. Typically the springs are S-shaped.

Compaction of the soil after sowing gives good seed to soil contact, enhancing germination and reducing slug damage. This may be achieved by levelling means (e.g., wheels) aligned with and following the seeding tines.

Where wheels follow the tines to flatten and compact the soil, one wheel preferably follows each seeding tine, and where the seeding tines are spring tines, each wheel may be attached by a rigid arm to the centre of the S-spring, the upper part of the spring serving to exert downward force through the arm on the wheel and thereby through the wheel to the soil. As each wheel is independent an even pressure is exerted on each seeded row, unlike barrel rolls fitted on some drills.

In a preferred embodiment of the invention the wheels following the first row of seeding tines are positioned to be between the seeding tines of the second row. In this way any soil or crop residue which is thrown out by the second row of seeding tines is prevented from landing on the seeded strips sown by the first row of seeding tines.

Where the seed is to be sown at or near the bottom of each shallow trench, the seeding tines may be adjusted to penetrate to substantially the same depth as the digging tines. Typically the seeding tines in this case comprise slotter tines, and in this event the subsequent soil flattening may be achieved using wheels or more preferably by using levelling tines, one set of levelling tines for each seeding tine.

In an apparatus in which the digging tines penetrate deeper than the seeding tines, the former typically penetrate to a depth in the range 20-170mm deeper than the depth to which the seed is to be delivered.

In one arrangement, the (first) row of digging tines are stone release tines, each being independently moveable in an upwards sense, clear of any unmoveable stone, leaving the other digging tines to continue to generate their trenches in an uninterrupted manner.

The apparatus of the invention only cultivates the soil where the seed is to be planted, thereby creating a conservation tillage, by not disturbing the soil between the seeded lines. This has the advantage that weed seed in the soil between the sown lines will tend not to germinate because the soil between the lines has not been disturbed.

Where seeds such as beans are to be sown it is normally advantageous not to disturb the soil below the depth at which they are to be sown so that in that event the digging tines should not penetrate lower than the seeding tines, and advantageously may be set to penetrate to a slightly reduced depth compared to the seeding tines, to achieve this.

Delivery of the seed near the top of the trench will normally be associated with the sowing of for example wheat, oats and barley, while delivery of the seed nearer the bottom of the trench will tend to be associated with the sowing of crops such as maize and beans, which are normally sown at a greater depth.

Road wheels may be attached to the frame and adapted to be raised or lowered as required, for trailing the machine behind a tractor when the road wheels are in their lowered position.

The road wheels may be removable from the frame to reduce the weight of the machine when in use, and quick release attachment means may be provided to allow the road wheels to be mounted and demounted as required.

Raising and lowering of the wheels may be achieved by pivoting wheel support arms relative to the frame, the wheels being carried on stub axles at the ends of the arms, remote from the ends which are pivotally attached to the frame.

The invention will now be described by way of example with reference to the accompanying drawings and illustrations in which:
Figure 1 is a diagrammatic side view of an apparatus according to the invention.
Figure 2 is a diagrammatic top plan view of an apparatus according to the invention.

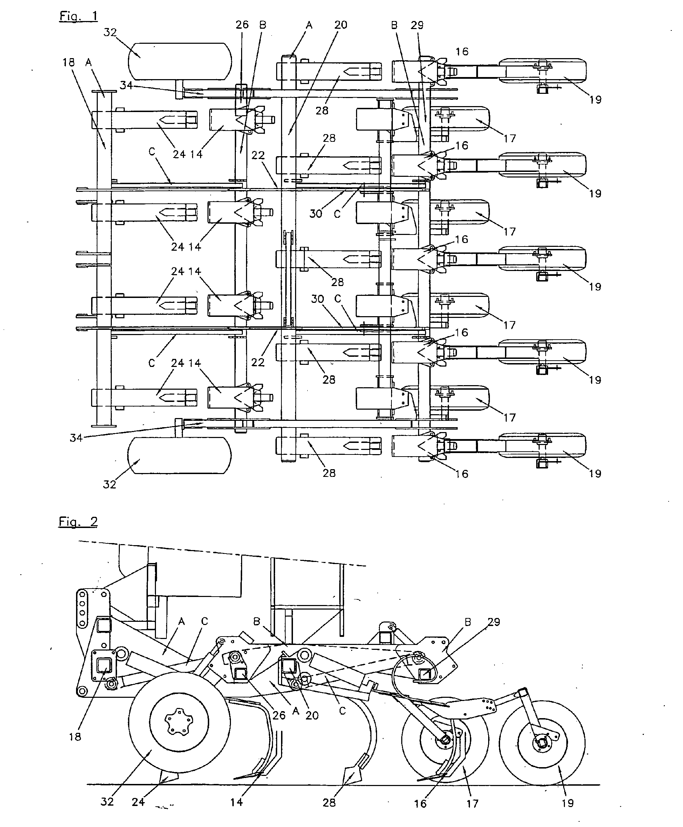

In Figures 1 and 2 a seed drill is shown embodying the invention, and comprising a seed hopper 10 from which seed is delivered by a pneumatic seed delivery system via seed delivery tubes 12 to each of a plurality of seeding tines 14, 16. The drill is attached to the 3-point hitch of a tractor (not shown).

The drill is made up of a first frame (A) connected to the 3-point hitch of a tractor (not shown) and a second frame (B) which is hingedly attached to the first frame (A) by rigid struts (C).

The first frame (A) comprises two lateral frame members 18, 20 rigidly connected together by connecting beams 22.

The second frame (B) comprises two lateral frame members 26, 29 rigidly connected together by connecting beams 30.

First row of digging tines 24 depend from lateral frame member 18. A first row of seeding tines 14 depend from lateral frame member 26. Each of the seeding tines 14 is aligned with a digging tine 18. The lateral distance between the midpoints of the digging tines 24 is 600mm. Likewise the lateral distance between the seeding tines 14 is 600mm.

A second row of digging tines 28 depend from lateral frame member 20. A second row of seeding tines 16 depend from lateral frame member 29. The digging tines 28 are positioned to be midway between the first row of digging tines 24. The seeding tines 16 are each aligned with a digging tine 28.

Wheels 17, 19 also depend from lateral frame member 29. Wheels 17 are aligned with seeding tines 14 and are positioned to lie between seeding tines 16. Wheels 19 are aligned with seeding tines 16.

Also connected to second frame (B) are depth wheels 32. The centre of the wheels is connected to a rod 34 which is slideably mounted in a slot (not shown) in frame (B). The vertical distance between the depth wheel and frame (B) can be adjusted, as desired, by moving the rod 34 in relation to the slot.

In use, the tractor pulls the drill across soil which is to be cultivated. As frame (A) is connected to the 3-point hitch, the digging depth of the tines 24, 28 can be controlled by the driver of the tractor from his cab.

During movement, the depth wheels ride on the surface of the soil and, by earlier selection of their position relative to frame (B), govern the seeding depth of tines 14, 16.

The digging tines are set to penetrate more deeply into the soil than are the seeding tines, so that disturbed soil exists both below and above the level at which the seed is delivered by the seeding tines.

Once the seed has been sown by seeding tines 14, 16 wheels 17, 19 level the soil where seed was sown. Additionally, because wheels 17 are positioned between seeding tines 16, any soil or crop residue which is thrown out by seeding tines 16 is prevented from landing on the seed sown by seeding tines 14.

Frame (B) is hingedly attached to the first tine (A) by rigid struts (C). The struts (C) are each of the same length and are parallel to each other, such that when the frames move relative to one another, they maintain the same orientation relative to each other, e.g., by remaining parallel to each other.

Thus, the tractor driver can alter the depth of the digging tines as desired, whilst maintaining a constant seeding depth.

It can therefore be seen that only frame (B) acts on the seeding tines, and the weight of frame (A) cannot disturb the seeding process. As a result, the seeding depth is more reliably controlled.

Digging tines 24 each create a line of cultivated soil with a width of 150mm, leaving an uncultivated strip of about 450mm after passage of the first rows of digging and seeding tines.

The second row of digging tines creates a line of cultivated soil with a width of 150mm in the middle of the 450mm uncultivated strips. Thus, after passage of all four rows of tines, the land is left as cultivated strips of 150mm separated by uncultivated strips of 150mm.

## Claims

1. An apparatus for cultivating soil and sowing seed comprising:
(a) a frame means (A, B) adapted in use to be towed by, or attached to the rear of, a tractor,
(b) a first row of spaced apart digging tines (24) carried by the frame means,
(c) a first row of seeding tines (14) carried by the frame means, each of the seeding tines being aligned with one of the digging tines to the rear of and spaced from the first row of digging tines measured in a direction parallel to the direction of forward motion of the apparatus when in use,
(d) a second row of spaced apart digging tines (28) carried by the frame means, none of which are aligned with any of the tine in the first row of digging tines (24),
(e) a second row of seeding tines (16) carried by the frame means, each of which is aligned with one of the tines in the second row of digging tines(28)
whereby, in use, soil will only be disturbed in parallel spaced apart linear regions where spacing is determined by the spacing between the tines in the two rows of digging tines (24, 28), measured at right angles to the direction of movement of the apparatus when in use, and leaving uncultivated strips of soil therebetween.

2. An apparatus according to claim 1, wherein the second row of digging tines (28) are positioned mid-way between the tines in the first row of digging tines (24).

3. An apparatus according to claim 1 or claim 2, wherein the frame means (A, B) comprises a first and a second frame, the second frame (B) being moveably attache to the first frame (A) and wherein the two rows of digging tines (24, 28) are carried by the first frame (A) and the two rows of seeding tines are carried by the second frame (B).

4. An apparatus according to any one of claims 1 to 3 which comprises levelling means (17, 19) aligned with and following the seeding tines (14, 16)_{.}

5. An apparatus according to claim 4, wherein the levelling means (17, 19) comprises wheels.

6. An apparatus according to claim 5 wherein the wheels (17) following the first row of seeding tines (14) are positioned to be between the seeding tines (16) of the second row.

## Patentansprüche

1. Vorrichtung zur Bodenbearbeitung und zum Ausbringen von Samen mit
(a) einem Rahmenmittel (A, B), das geeignet ist, von einem Traktor gezogen oder hinten an einem Traktor angehängt zu werden,
(b) einer ersten Reihe von beabstandeten Grabzinken (24), die vom Rahmenmittel getragen werden,
(c) einer ersten Reihe von Säzinken (14), die vom Rahmenmittel getragen werden und jeweils gemessen in einer parallel zu der Richtung der Vorwärtsbewegung der im Gebrauch befindlichen Vorrichtung verlaufenden Richtung auf eine der Grabzinken hinter der ersten Reihe von Grabzinken und von dieser beabstandet ausgerichtet sind,
(d) einer zweiten Reihe von beabstandeten Grabzinken (28), die vom Rahmenmittel getragen werden und von denen keine auf irgendeine der Zinken in der ersten Reihe von Grabzinken (24) ausgerichtet ist,
(e) einer zweiten Reihe von Säzinken (16), die vom Rahmenmittel getragen werden und jeweils auf eine der Zinken in der zweiten Reihe von Grabzinken (28) ausgerichtet sind,
wobei der Boden im Gebrauch nur in parallelen, beabstandeten, linearen Bereichen aufgebrochen wird, wobei der Abstand durch den Abstand zwischen den Zinken in den beiden Reihen von Grabzinken (24, 28), gemessen im rechten Winkel zur Bewegungsrichtung der im Gebrauch befindlichen Vorrichtung, bestimmt wird, und dazwischen unbearbeitete Bodenstreifen belassen werden.

2. Vorrichtung nach Anspruch 1, wobei die zweite Reihe von Grabzinken (28) auf halbem Wege zwischen den Zinken in der ersten Reihe von Grabzinken (24) positioniert sind.

3. Vorrichtung nach Anspruch 1 oder 2, wobei das Rahmenmittel (A, B) einen ersten und einen zweiten Rahmen umfasst, wobei der zweite Rahmen (B) beweglich am ersten Rahmen (A) angebracht ist und wobei die beiden Reihen von Grabzinken (24, 28) vom ersten Rahmen (A) getragen werden und die beiden Reihen von Säzinken vom zweiten Rahmen (B) getragen werden.

4. Vorrichtung nach einem der Ansprüche 1 bis 3, wobei die Vorrichtung ein Nivellierungsmittel (17, 19) umfasst, das auf die Säzinken (14, 16) ausgerichtet ist und diesen folgt.

5. Vorrichtung nach Anspruch 4, wobei das Nivellierungsmittel (17, 19) Räder umfasst.

6. Vorrichtung nach Anspruch 5, wobei die der ersten Reihe von Säzinken (14) folgenden Räder (17) so positioniert sind, dass sie sich zwischen den Säzinken (16) der zweiten Reihe befinden.

## Revendications

1. Appareil pour cultiver le sol et semer des graines, comprenant :
(a) un moyen de cadre (A, B) adapté, pendant l'utilisation, pour être remorqué par un tracteur ou pour être attaché à l'arrière de celui-ci,
(b) une première rangée de dents d'enfoncement espacées (24) portées par le moyen de cadre,
(c) une première rangée de dents de semoir (14) portées par le moyen de cadre, chacune des dents de semoir étant alignée avec l'une des dents d'enfoncement à l'arrière et à distance de la première rangée de dents d'enfoncement, mesurée dans une direction parallèle à la direction du mouvement d'avance de l'appareil pendant l'utilisation,
(d) une deuxième rangée de dents d'enfoncement espacées (28) portées par le moyen de cadre, aucune d'entre elles n'étant alignée avec les dents de la première rangée de dents d'enfoncement (24),
(e) une deuxième rangée de dents de semoir (16) portées par le moyen de cadre, chacune d'entre elles étant alignée avec l'une des dents dans la deuxième rangée de dents d'enfoncement (28),
dans lequel, pendant l'utilisation, le sol ne sera travaillé que dans les régions linéaires espacées parallèles dans lesquelles l'espacement est déterminé par l'espacement entre les dents dans les deux rangées de dents d'enfoncement (24, 28), mesuré à angle droit par rapport à la direction du mouvement de l'appareil pendant l'utilisation, en laissant des bandes de terre non cultivées entre elles.

2. Appareil selon la revendication 1, dans lequel la deuxième rangée de dents d'enfoncement (28) est positionnée à mi-chemin entre les dents dans la première rangée de dents d'enfoncement (24).

3. Appareil selon la revendication 1 ou 2, dans lequel le moyen de cadre (A, B) comprend un premier et un deuxième cadre, le deuxième cadre (B) étant attaché de manière mobile au premier cadre (A) et dans lequel les deux rangées de dents d'enfoncement (24, 28) sont portées par le premier cadre (A) et les deux rangées de dents sont portées par le deuxième cadre (B).

4. Appareil selon l'une quelconque des revendications précédentes 1 à 3, comprenant un moyen de nivellement (17, 19) aligné avec et suivant les dents de semoir (14, 16).

5. Appareil selon la revendication 4, dans lequel le moyen de nivellement (17, 19) comprend des roues.

6. Appareil selon la revendication 5, dans lequel les roues (17) suivant la première rangée de dents de semoir (14) sont positionnées de manière à être entre les dents de semoir (16) de la deuxième rangée.
